# FASCICULE DE BREVET EUROPEEN

(11) **EP 0 619 478 B1**
(45) Date de publication et mention de la délivrance du brevet: **21.05.1997**
(21) Numéro de dépôt: 94400735.0
(22) Date de dépôt: 05.04.1994
(51) Int. Cl.: G01M 3/22

(54) **Installation de détection de fuites pour le contrôle d'étanchéité d'emballages scellés**
Dichtigkeitsaufspüranlage zur Kontrolle von versiegelten Verpackungen
Leak detection installation for checking sealed packages

(30) Priorité: 08.04.1993 FR 9304191
(43) Date de publication de la demande: 12.10.1994
(73) Titulaire: ALCATEL CIT, 75008 Paris (FR)
(72) Inventeur: Seigeot, Bertrand, F-74230 Dingy Saint Clair (FR)
(74) Mandataire: Fournier, Michel

(56) Documents cités:
- EP-A- 0 445 002
- NL-A- 8 303 080

## Description

La présente invention concerne une installation de détection de fuite pour le contrôle d'étanchéité d'emballages scellés.

On connaît par le document EP-A-0 445 002 une installation qui comprend un convoyeur sur lequel sont déposées des barquettes à contrôler. Avant de les sceller, il a été introduit dans celles-ci une petite quantité d'hélium. Au-dessus du convoyeur est située une hotte reliée, par une conduite, à un ventilateur d'extraction. La hotte est mobile verticalement par le moyen de vérins. Lorsque la présence d'une barquette est détectée, la hotte s'abaisse et des moyens liés à la hotte viennent exercer une certaine pression contre la barquette. Une sonde de reniflage, reliée à un détecteur de fuite à hélium est située à l'embouchure de la conduite reliant la hotte au ventilateur. Si le courant d'air extrait par le ventilateur est chargé en hélium, cela indique une fuite de la barquette et un dispositif de commande actionne un évacuateur. De préférence, pour détecter un défaut d'étanchéité sur le fond de la barquette, la bande transporteuse est ajourée pour permettre l'entraînement, par le courant d'air provoqué par la ventilation, du gaz de fuite s'échappant du fond.

Ce système par reniflage, s'exerçant à une pression très voisine de la pression atmosphérique, nécessite ainsi d'exercer une certaine pression mécanique sur la barquette afin qu'en cas de fissure de l'emballage, un courant de fuite entraîné par le courant d'air soit créé, ce qui interdit cette méthode sur les emballages rigides.

Lorsque les emballages contiennent des aliments délicats, cette pression mécanique exercée sur l'emballage risque d'abîmer les aliments.

On a vu que la bande doit être ajourée pour permettre de déceler une fuite sur le fond mais cela peut ne pas être suffisant, et de même la pression mécanique qui est exercée par une plaque peut empêcher de déceler une fuite située à la partie supérieure de l'emballage, sous la plaque d'appui.

La sensibilité de la méthode est faible. La surpression créé dans l'emballage par le moyen mécanique utilisé n'est pas correctement maîtrisée. Enfin, l'homogénéité de l'hélium dans le courant d'air, créé par le ventilateur, n'est pas excellente.

La présente invention a pour but de pallier ces inconvénients et à pour objet une installation de détection de fuite pour le contrôle d'étanchéité d'emballages scellés souples ou rigides, contenant une certaine proportion de gaz traceur, comportant un transporteur à bande, une cloche située au-dessus dudit transporteur et comprenant un moyen moteur permettant d'élever ladite cloche et de l'abaisser jusqu'à prendre appui sur la bande dudit transporteur, ladite cloche étant reliée à un détecteur de fuite à gaz traceur, l'ensemble étant commandé par une électronique de commande, caractérisée en ce que ladite bande étant en un matériau non poreux et non ajouré, la cloche porte à sa périphérie des moyens assurant, en position basse de la cloche et en coopération avec la bande dudit transporteur, l'étanchéité de ladite cloche, en ce que la cloche est reliée à une pompe à vide et en ce qu'une contre-plaque, équipée d'un système de joints, est disposée sous ladite bande au droit de ladite cloche, ladite contre-plaque étant évidée et reliée par une canalisation flexible à ladite cloche.

Selon une réalisation particulière, lesdits moyens assurant l'étanchéité de ladite cloche comprennent deux joints concentriques et le système de joints de ladite contre-plaque comprend également deux joints concentriques, une seconde pompe à vide étant reliée aux espaces inter-joints de ladite cloche et de ladite plaque.

Avantageusement, en position basse de la cloche, une surface rigide solidaire de la cloche et dont le profil épouse la portion supérieure dudit emballage vient au voisinage immédiat de cette dite portion supérieure, sans la comprimer. Ceci est utile dans le cas où la résistance mécanique de l'emballage n'est pas suffisante pour supporter le différentiel de pression lors du contrôle d'étanchéité.

On va maintenant donner la description d'un exemple de mise en oeuvre de l'invention en se reportant au dessin annexé dans lequel:

La figure 1 est un schéma représentant l'ensemble de l'installation selon l'invention.

Les figures 2 et 3 montrent respectivement en élévation et en coupe selon III-III de la figure 2 le transporteur à bande avec son bâti ainsi que la cloche, la contre-plaque et différents accessoires.

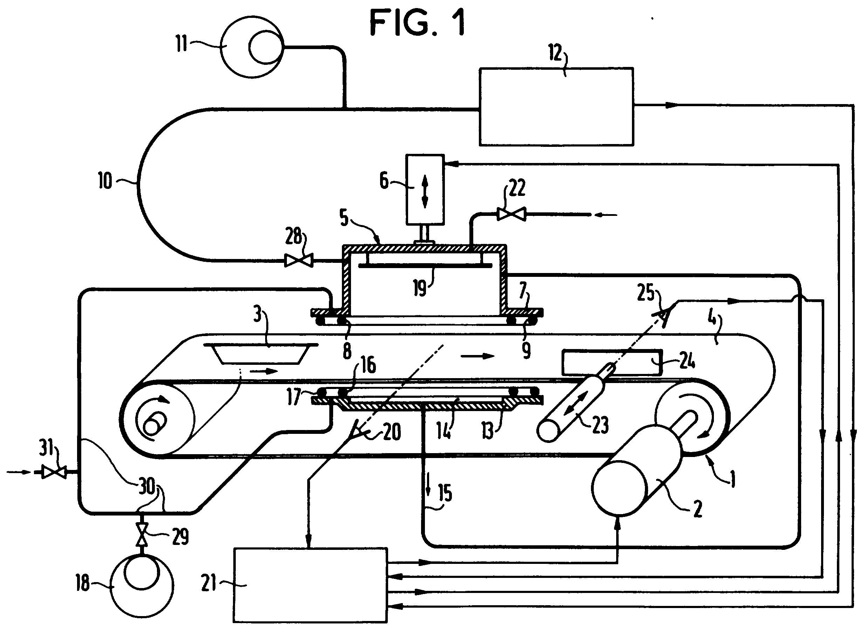

En se reportant à la figure 1 qui montre schématiquement l'ensemble de l'installation, on voit un transporteur à bande 1 mû par un moteur 2. Sur ce transporteur, on voit une barquette 3. Il s'agit par exemple d'une barquette contenant un produit alimentaire. La barquette est fermée à sa partie supérieure par un opercule scellé sur le pourtour de la barquette. Avant de sceller cet opercule, un gaz traceur tel que de l'hélium a été introduit dans la barquette à une concentration d'environ 5%. La barquette n'est qu'un exemple possible d'emballage, il peut s'agir également d'un étui souple, d'un emballage semi-rigide parallélépipédique. La bande 4 du transporteur est une bande en un matériau continu, non ajouré et non poreux, par exemple un élastomère ou de l'acier inoxydable.

Au-dessus du transporteur 1 est disposée une cloche 5 qui peut être déplacée verticalement par un vérin 6. Le vérin 6 permet d'abaisser la cloche 5 jusqu'à prendre appui contre la bande 4 du transporteur.

La cloche 5 porte à sa périphérie inférieure un rebord 7 qui est équipé de deux joints toriques concentriques 8 et 9 assurant, en position basse de la cloche, en combinaison avec la bande 4 du transporteur, l'étanchéité de la cloche. La cloche 5 est reliée, par une canalisation flexible 10, à une pompe à vide 11. La cloche est aussi reliée, par cette même canalisation 10 à un détecteur de fuite à gaz traceur 12. Il s'agit par exemple d'un détecteur de fuite à hélium si le gaz traceur choisi, introduit dans les barquettes telles que 3, est de l'hélium.

Pour éviter la déformation du brin supérieur de la bande 4 lorsque la cloche et en position basse et que la pompe à vide 11 est mise en route pour faire le vide dans la cloche 5, une contre-plaque 13 est disposée sous le brin supérieur de la bande 4. Cette contre-plaque 13 comporte un évidement 14 qui est relié par une canalisation flexible 15 à la cloche 5.

Deux joints toriques concentriques 16 et 17 assurent l'étanchéité de la contre-plaque 13 contre la bande 4.

Cette contre-plaque 13 n'est pas indispensable si le matériau de la bande est suffisamment rigide. Les espaces inter-joints 8-9 de la cloche 5 et 16-17 de la contre-plaque 13 sont reliés à une seconde pompe à vide 18 indépendante de la pompe à vide 11.

Pour éviter le gonflement et l'éventuel éclatement de la barquette 3 lors de la mise sous vide de la cloche 5, celle-ci est équipée, si besoin est d'une plaque de maintien 19 dont la hauteur, en position basse de la cloche, par rapport au brin supérieur de la bande 4 correspond à la hauteur de la barquette dans son état de repos. Ainsi, lors de la mise sous vide de la cloche, cette plaque de maintien 19 évite le gonflement de la barquette.

Avant la mise sous vide, cette plaque n'exerce aucune pression sur la barquette et il peut même y avoir un léger jeu. Cette plaque peut éventuellement être ajourée.

Dans l'exemple décrit où la barquette 3 comporte un opercule supérieur de fermeture plat, la plaque de maintien 19 est plate. Cependant, d'une façon générale, il suffit d'utiliser une surface rigide dont le profil épouse la partie supérieure des emballages ou conditionnements à contrôler s'ils n'ont pas une résistance mécanique suffisante.

Une cellule 20, reliée à une électronique de commande 21 de l'ensemble, détecte l'arrivée d'une barquette 3.

Le circuit 21 commande alors l'arrêt du moteur 2 et la descente de la cloche 5 par le vérin 6. La cloche 5 constitue ainsi une chambre de test étanche.

La pompe à vide 11, ainsi que la pompe à vide 18 sont mises en route et, lorsque la pression est suffisamment basse dans la cloche 5, le détecteur 12 se met en marche. Une fois le contrôle effectué, les vannes 28 et 29 se ferment, la chambre de test et les espaces inter-joints sont remis à la pression atmosphérique par l'ouverture de vannes d'entrée d'air 22 et 31, la cloche 5 est relevée et le transporteur à bande redémarre.

Si le détecteur 12 détecte une fuite, l'électronique de commande 21 commande la mise en marche d'un vérin 23 qui actionne un organe évacuateur 24 dès que l'emballage défectueux a été détecté par une cellule 25.

L'installation selon l'invention permet d'obtenir une excellente sensibilité, très supérieure à une installation fonctionnant en reniflage comme dans l'art antérieur cité. La sensiblité obtenue peut être facilement dix mille fois meilleure.

Par ailleurs, l'installation permet de faire un contrôle dans lequel la sensibilité ne dépend pas de la localisation de la fuite sur l'emballage, l'on est beaucoup plus sûr que la fuite atteindra le détecteur, même si elle est située sous la barquette ou entre l'opercule de fermeture supérieure et la plaque de maintien 19.

L'installation permet cependant, si on le souhaite, en effectuant une dépression dans la cloche 5 plus faible, d'utiliser le détecteur 12 en reniflage en le reliant à une sonde de reniflage introduite dans la canalisation 10 de liaison entre la cloche 5 et la pompe à vide 11. La sensibilité est alors moindre mais la cadence supérieure.

A titre d'exemple non limitatif, on donne les valeurs suivantes:

Les barquettes 3 sont cylindriques, en plastique, avec un opercule de fermeture en aluminium. Le diamètre est de 185 mm et la hauteur de 45 mm, la sensibilité recherchée correspond à un trou de 10 microns sur une longueur de 1 mm et la cadence de test de 600 à l'heure. La cloche 5 est cylindrique avec un jeu radial par rapport à la barquette de 1 cm. La pompe 11 utilisée a une capacité nominale de 36 m³/h. La pression finale dans la cloche est de 10 mbar, pression à laquelle le détecteur 12 peut passer en phase de test.

L'installation permet évidemment le contrôle d'emballages qu'ils soient rigides ou non.

Les emballages n'étant pas mécaniquement comprimés pour effectuer une surpression, les aliments ne sont pas écrasés. La surpression provient du vide effectué dans la cloche.

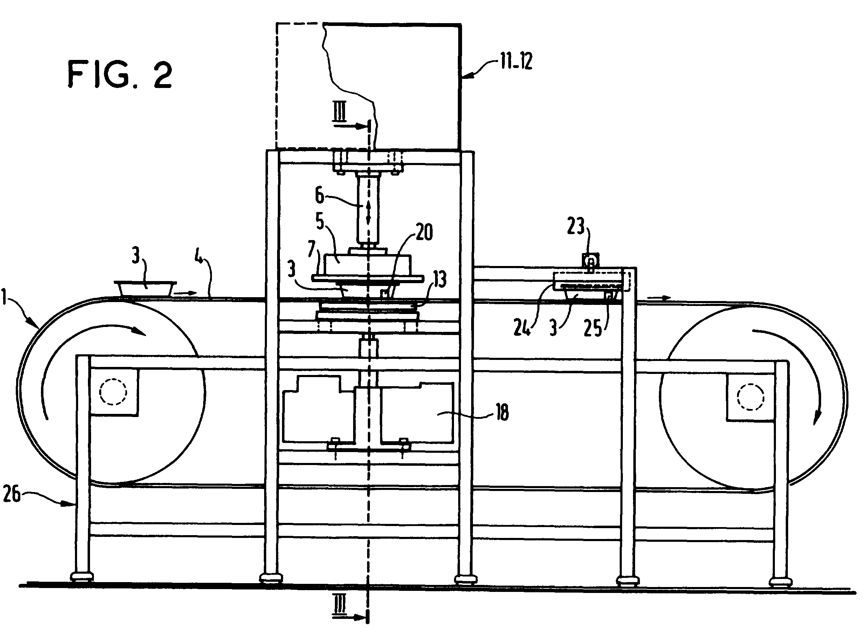

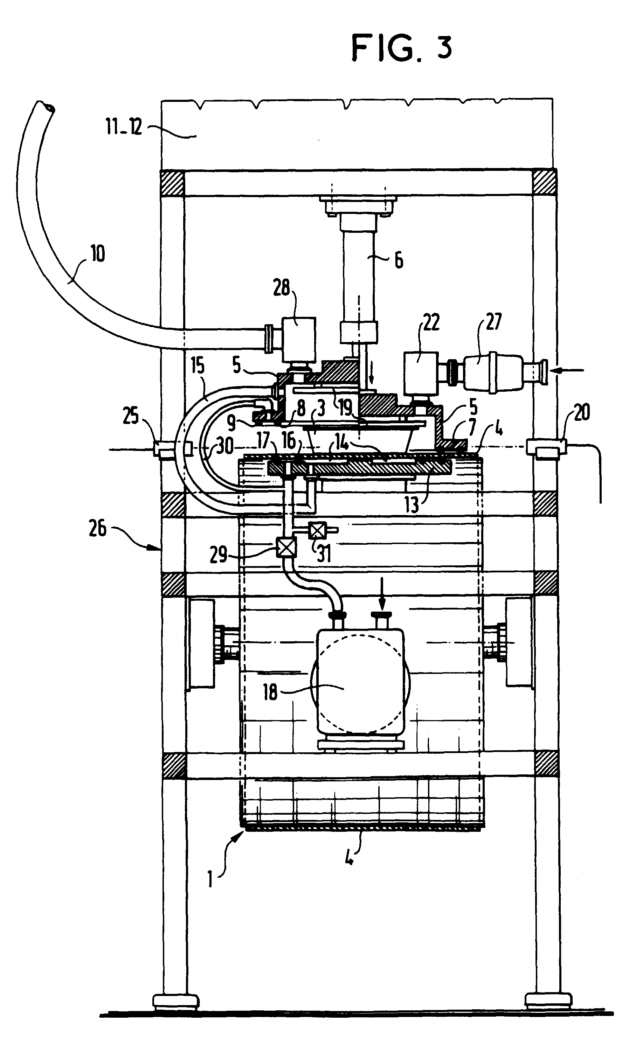

Les figures 2 et 3 permettent d'avoir une vue plus pratique de l'installation. Les références utilisées sur ces figures correspondent aux organes référencées sur la figure 1.

Sur ces figures, on voit un châssis 26 qui supporte tout l'ensemble de l'installation et qui n'est pas figuré sur le schéma de la figure 1.

Sur la figure 2, le détecteur 12 et la pompe à vide 11 sont situés à la partie supérieure du châssis 26 et simplement figurés par un rectangle.

Sur la figure 3, on a arrêté la figure au sommet du châssis 26 sans représenter ce rectangle figurant la pompe et le détecteur reliés à la canalisation flexible 10 qui est donc représentée interrompue.

Sur cette figure 3, la vanne d'entrée d'air 22 est équipée d'un filtre d'entrée d'air 27. La canalisation flexible 10 est équipée d'une vanne d'isolement 28. La pompe à vide 18 est équipée d'une vanne d'isolement 29 et est reliée aux espaces inter-joints 8-9 et 16-17 par une conduite flexible 30 équipée d'une vanne d'entrée d'air 31.

Sur la partie droite de la figure 3 la cloche 5 est représentée en position basse et sur la partie gauche, en position relevée.

## Revendications

1. Installation de détection de fuite pour le contrôle d'étanchéité d'emballages scellés (3), souples ou rigides, contenant une certaine proportion de gaz traceur, comportant un transporteur à bande (1), une cloche (5) située au-dessus dudit transporteur et comprenant un moyen moteur (6) permettant d'élever ladite cloche et de l'abaisser jusqu'à prendre appui sur la bande (4) dudit transporteur (1), ladite cloche (5) étant reliée à un détecteur de fuite à gaz traceur (12), l'ensemble étant commandé par une électronique de commande (21), caractérisée en ce que ladite bande (4) étant en un matériau non poreux et non ajouré, la cloche (5) porte à sa périphérie inférieure des moyens (8, 9) assurant, en position basse de la cloche (5) et en coopération avec la bande (4) dudit transporteur (1), l'étanchéité de ladite cloche, en ce que la cloche est reliée à une pompe à vide (11) et en ce qu'une contre-plaque (13), équipée d'un système de joints (16, 17), est disposée sous ladite bande au droit de ladite cloche (5), ladite contre-plaque étant évidée (14) et reliée par une canalisation flexible (15) à ladite cloche.

2. Installation selon la revendication 1, caractérisée en ce que lesdits moyens assurant l'étanchéité de ladite cloche comprennent deux joints concentriques (8, 9), en ce que le système de joints de ladite contre-plaque comprend deux joints concentriques (16, 17) et en ce qu'une seconde pompe à vide (18) est reliée à l'espace inter-joints de ladite cloche et à l'espace inter-joints de ladite plaque.

3. Installation selon l'une des revendications précédentes caractérisée en ce que, en position basse de la cloche, une surface rigide (19) solidaire de la cloche (5) et dont le profil épouse la portion supérieure dudit emballage (3) vient au voisinage immédiat de cette dite portion supérieure, sans la comprimer.

## Patentansprüche

1. Leckprüfanlage für die Dichtheitskontrolle von versiegelten nachgiebigen oder steifen Verpackungen (3), die eine bestimmte Menge von Spürgas enthalten, mit einem Förderband (1), einer Glocke (5) oberhalb des Förderbands und mit einem Antriebsmittel (6), das es erlaubt, die Glocke anzuheben und abzusenken, bis sie auf dem Band (4) des Förderbands (1) aufliegt, wobei die Glocke (5) mit einem Spürgasdetektor (12) verbunden ist und die Einheit von einer Steuerelektronik (21) gesteuert wird, dadurch gekennzeichnet, daß das Band (4) aus einem nicht-porösen und nicht-gelochten Material ist und die Glocke (5) an ihrem Umfang Mittel (8, 9) aufweist, die in der unteren Stellung der Glocke (5) und in Zusammenwirkung mit dem Band (4) des Förderbands (1) die Dichtheit der Glocke gewährleisten, daß die Glocke mit einer Vakuumpumpe (11 verbunden ist und daß eine Gegenplatte (13), die mit einem Dichtungssystem (16, 17) versehen ist, unter dem Band gegenüber der Glocke (5) angeordnet ist, wobei die Gegenplatte (14) ausgehöhlt und über eine flexible Leitung (15) mit der Glocke verbunden ist.

2. Anlage nach Anspruch 1, dadurch gekennzeichnet, daß die die Dichtheit der Glocke gewährleistenden Mittel zwei konzentrische Dichtungen (8, 9) enthalten, daß das Dichtungssystem der Gegenplatte zwei konzentrische Dichtungen (16, 17) besitzt und daß eine zweite Vakuumpumpe (18) mit dem Zwischenraum zwischen den Dichtungen der Glocke und mit dem Zwischenraum zwischen den Dichtungen der Platte verbunden ist.

3. Anlage nach einem der vorhergehenden Ansprüche, dadurch gekennzeichnet, daß in der unteren Stellung der Glocke eine fest mit der Glocke verbundene steife Fläche (19), deren Profil sich dem oberen Abschnitt der Verpackung (3) anpaßt, in die direkte Nähe dieses Abschnitts kommt, ohne die Verpackung zu komprimieren.

## Claims

1. A leak-detection installation for testing the gastightness of flexible or rigid sealed packages (3) containing a certain concentration of tracer gas, said installation including a belt conveyor (1), a bell-shaped cover (5) situated above said conveyor and including drive means (6) enabling said cover to be raised and to be lowered until it bears against the belt (4) of said conveyor (1), said cover (5) being connected to a tracer gas leak detector (12), the resulting assembly being controlled by control electronic circuitry (21), said installation being characterized in that said belt (4) is made of a material that is both non-porous and non-perforated, and in that the cover (5) carries sealing means (8, 9) at its bottom periphery for co-operating with the belt (4) of said conveyor (1) to guarantee the gastightness of said cover (5) when it is in the low position, in that the cover is connected to a vacuum pump (11), and in that a backing plate (13) provided with a system of sealing rings (16, 17) is disposed under said belt and in alignment with said cover (5), said backing plate having a recess (14) and being connected to said cover via a hose (15).

2. An installation according to claim 1, characterized in that said means for guaranteeing the gastightness of said cover comprise two concentric sealing rings (8, 9), in that the system of sealing rings of said backing plate comprises two concentric sealing rings (16, 17), and in that a second vacuum pump (18) is connected to the space between the sealing rings of said cover and to the space between the sealing rings of said plate.

3. An installation according to any preceding claim, characterized in that, when the cover is in the low position, a rigid surface (19) that is secured to the cover (5), and whose outline matches the top portion of said package (3) comes into the immediate vicinity of said top portion without compressing it.
